Europäisches Patentamt

European Patent Office

Office européen des brevets

(19)

(11) Numéro de publication : **0 374 005 B1**

# (12) FASCICULE DE BREVET EUROPEEN

(45) Date de publication du fascicule du brevet :
**30.09.92 Bulletin 92/40**

(51) Int. Cl.$^5$ : **G01N 27/12**

(21) Numéro de dépôt : **89403378.6**

(22) Date de dépôt : **06.12.89**

(54) **Procédé de fabrication d'un capteur de détection de gaz, capteur en résultant.**

(30) Priorité : **06.12.88 FR 8815975**

(43) Date de publication de la demande :
**20.06.90 Bulletin 90/25**

(45) Mention de la délivrance du brevet :
**30.09.92 Bulletin 92/40**

(84) Etats contractants désignés :
**AT BE CH DE ES FR GB GR IT LI LU NL SE**

(56) Documents cités :
**GB-A- 2 029 583**
**US-A- 4 504 522**
**EXTENDED ABSTRACTS, vol. 80-2, octobre 1980, pages 1367-1369, résumé no. 547, Princeton, US; H. OGAWA et al.: "A new typeultra-fine particle gas sensor"**

(72) Inventeur : **Breuil, Philippe**
**3 rue Flobert**
**F-42000 Saint-Etienne (FR)**
Inventeur : **Pijolat, Christophe**
**12 allée de l'Etang**
**F-42350 La Talaudiere (FR)**
Inventeur : **Tounier, Guy**
**28ter rue Albert 1er**
**F-42000 Saint-Etienne (FR)**
Inventeur : **Lalauze, René**
**26 rue Eugène Joly**
**F-42100 Saint-Etienne (FR)**

(74) Mandataire : **Robert, Jean-Pierre et al**
**CABINET BOETTCHER 23, rue la Boétie**
**F-75008 Paris (FR)**

(73) Titulaire : **ASSOCIATION POUR LA RECHERCHE ET LE DEVELOPPEMENT DES METHODES ET PROCESSUS INDUSTRIELS (ARMINES)**
**60, Boulevard Saint-Michel**
**F-75272 Paris Cédex 06 (FR)**

## Description

La présente invention concerne un procédé de fabrication d'un capteur de détection de traces ou d'impuretés gazeuses dans une atmosphère à surveiller, par mesure de la conductivité électrique d'une couche poreuse d'oxyde d'étain.

La variation de la conductivité électrique de ces oxydes métalliques, en fonction de la température et de la présence de certains gaz, est utilisée pour la détection de traces ou d'impuretés gazeuses dans une atmosphère à contrôler.

L'un des facteurs influençant cette variation et tenant à la présence d'un gaz est la chimisorption, c'est-à-dire le transfert électronique entre le gaz et l'oxyde.Ainsi, selon le cas, le gaz absorbé va prendre ou céder des électrons à l'oxyde semi-conducteur. Selon le type p ou n du semi-conducteur et le caractère donneur ou accepteur du gaz, la conductance augmentera (p, accepteur ou n, donneur) ou diminuera (n, accepteur ou p, donneur). On comprend que les occasions d'échange entre le gaz et le semi-conducteur doivent être les plus importantes possibles pour que le capteur soit sensible. Pour une quantité donnée d'oxyde déposé, il faut donc disposer de la plus grande surface d'échange possible, donc chercher à rendre la couche la moins compacte possible.

On connaît des procédés de fabrication de tels capteurs (voir p.ex. GB-A-2029583) qui consistent à déposer par évaporation sous vide un oxyde métallique semi-conducteur (oxyde d'étain $SnO_2$) . Le mode opératoire est grossièrement le suivant. Dans une chambre contenant un substrat isolant et un creuset porté à une température comprise entre 1100 et 1300°C, on fait le vide jusqu'à $10^{-4}$ Pa environ et on introduit un courant d'oxygène de l'ordre de 10-20 Pa. Il se produit un dépôt d'une couche de $SnO_2$ sur le substrat situé dans la chambre à quelques centimètres du creuset qui présente une structure colonnaire bien connue qui, sans être compacte, n'offre pas suffisamment de sites au siège d'une chimisorption pour qu'un capteur de ce type soit d'une très grande sensibilité.

Si on augmente la pression d'oxygène au moment de l'évaporation pour atteindre 130 Pa et plus, la structure de la couche déposée se modifie et devient de type spongieux, ce qui est plus favorable pour l'obtention d'une sensibilité acceptable. Cependant une telle pression d'oxygène entraîne l'oxydation du métal réfractaire du creuset, les oxydes formés étant entraînés en direction du substrat et polluent la couche spongieuse déposée, en détruisant la sensibilité du capteur.

L'invention résulte de nombreux travaux au cours desquels on a mis en évidence un certain nombre de phénomènes qui président à la formation d'une couche spongieuse homogène.

C'est ainsi que fut déterminée l'une des caractéristiques principales du procédé de fabrication selon l'invention, à savoir qu'il fallait procéder à l'évaporation de l'oxyde métallique dans un courant gazeux comprenant obligatoirement de l'oxygène et un gaz neutre de manière à disposer d'une pression totale compatible avec la constitution d'une structure spongieuse (entre 100 et 200 Pa environ) tout en évitant la pollution de la couche par des oxydes métalliques réfractaires du fait que la présence d'oxygène est limitée à une pression partielle dans ce mélange, comprise entre 20 et 130 Pa et de préférence entre 20 et 80 Pa.

Un mélange très acceptable est un mélange oxygène azote dans les proportions de leur présence dans l'air naturel, dont la pression totale est réglée entre 100 et 200 Pa. Cette pression dépend d'un grand nombre de facteurs,le plus important étant la distance entre le substrat et le creuset.

Les travaux ont en effet montré que l'oxygène au contact du bain d'étain fondu oxyde la surface de ce bain, l'oxyde étant alors sublimé. Il est fort probable qu'une structure spongieuse résulte d'une condensation de cette vapeur d'oxyde avant son arrivée sur le substrat, condensation qui proviendrait d'un refroidissement des molécules de vapeur au cours des chocs qu'elles subissent dans le courant gazeux entre elles et avec les molécules du courant. Donc une certaine "densité" de ce courant est génératrice d'une structure spongieuse, densité qui doit être d'autant plus importante que le trajet entre creuset et substrat est faible (afin de conserver les occasions de choc en nombre équivalent), et qui doit être assez riche en oxyde donc en oxygène au départ pour que le temps de dépôt ne s'allonge pas trop.

A titre d'exemple, on indiquera que la pression totale peut être de 100 à 120 Pa si la distance creuset substrat est de l'ordre de 3,5 cm, alors qu'elle sera de 150, 160 Pa si cette distance est de l'ordre de 2 cm.

Par ailleurs, les travaux ont également montré qu'une quantité minimale d'oxygène était nécessaire pour oxyder l'étain. Cette quantité dépend de la température du bain et traduite en pression partielle d'oxygène, est de l'ordre de quelques Pa.

On notera enfin qu'il existe également une limite à la pression totale du courant gazeux qui dépend en grande partie de la géométrie de la chambre de dépôt sous vide. En effet au delà de 250, 300 Pa, il se produit des phénomènes de convection conduisant à des hétérogénéités de dépôt qui ne permettent plus une fabrication stable et reproductible. On sait aussi qu'au delà de ces pressions les capteurs fabriqués à titre expérimental ne présentent plus d'amélioration sensible de leurs caractéristiques de réponse.

Les électrodes de connexion de la couche mince déposée sur le substrat résistif sont constituées par de fines couches d'or déposées sur le substrat avant le dépôt d'oxydes d'étain, ou après ce dernier.

Bien entendu, le procédé selon l'invention permet d'ajuster la quantité d'oxydes déposée par réglage de la distance entre le substrat et le creuset et/ou par l'ajustement du temps d'exposition à la vapeur de métal. On peut ainsi ajuster en conséquence la température à laquelle en exploitation le capteur est le plus sensible. En effet, la variation de la conductance d'un tel capteur en présence d'un gaz donné varie selon la température de mesure. Elle passe par un maximum souvent très prononcé pour une température bien précise qui dépend, entre autres facteurs, de l'épaisseur de la couche poreuse, qui peut être facilement ajustée dans le procédé de l'invention.

## Revendications

1. Procédé de fabrication d'un capteur de détection de traces ou d'impuretés gazeuses selon lequel on procède à l'évaporation, sous pression partielle d'oxygène, d'étain et/ou d'oxyde d'étain pour condenser les vapeurs sur un substrat électriquement isolant et y créer un dépôt en couche poreuse, caractérisé en ce que l'évaporation de l'oxyde métallique ou du métal est réalisée sous une pression comprise entre 100 et 200 Pa dans un courant gazeux comprenant de l'oxygène et un gaz neutre, la pression partielle de l'oxygène dans ce mélange étant comprise entre 20 et 130 Pa.

2. Procédé selon la revendication 1 caractérisé en ce que la pression partielle de l'oxygène dans le mélange est limitée à 80 Pa.

3. Procédé selon la revendication 1 ou la revendication 2 caractérisé en ce que la pression partielle d'oxygène est environ égale au cinquième de la pression totale.

4. Procédé selon la revendication 1 caractérisé en ce que, préalablement ou postérieurement à la constitution de la couche poreuse d'oxyde métallique, on réalise des électrodes de connexion par dépôt sur le support d'une couche d'or préalablement évaporé.

5. Capteur de détection de traces ou d'impuretés gazeuses, issu du procédé selon l'une des revendications précédentes, caractérisé en ce que la couche d'oxyde métallique semi-conducteur possède une structure spongieuse exempte d'oxydes provenant du matériau du creuset d'évaporation.

## Patentansprüche

1. Verfahren zur Herstellung eines Sensors zum Erfassen von Gas-Spuren oder -Verunreinigungen, bei dem man unter Sauerstoffpartialdruck Zinn und/oder Zinnoxid verdampft, um die Dämpfe auf einem elektrisch isolierenden Substrat zu kondensieren und dort einen Niederschlag in Form einer porösen Schicht zu erzeugen, dadurch **gekennzeichnet**, daß die Verdampfung des Metalloxides oder des Metalls unter einem Druck zwischen 100 und 200 Pa in einem Gasstrom durchgeführt wird, der Sauerstoff und ein neutrales Gas enthält, wobei der Partialdruck des Sauerstoffes in diesem Gemisch zwischen 20 und 130 Pa liegt.

2. Verfahren nach Anspruch 1, dadurch **gekennzeichnet**, daß der Partialdruck des Sauerstoffes in der Mischung auf 80 Pa begrenzt ist.

3. Verfahren nach Anspruch 1 oder Anspruch 2, dadurch **gekennzeichnet**, daß der Partialdruck des Sauerstoffes ungefähr gleich einem Fünftel des Gesamtdruckes ist.

4. Verfahren nach Anspruch 1, dadurch **gekennzeichnet** daß man vor oder nach der Herstellung der porösen Metalloxid-Schicht Verbindungselektroden herstellt, in dem man auf dem Träger eine Schicht aus vorher verdampftem Gold niederschlägt.

5. Sensor zum Erfassen von Gas-Spuren oder -Verunreinigungen, der durch ein Verfahren gemäß einem der vorangegangenen Ansprüche erzeugt wurde, dadurch **gekennzeichnet**, daß die Halbleiterschicht aus Metalloxid eine schwammartige Struktur besitzt, die frei von Oxiden des Materials des Verdampfungsgefäßes ist.

## Claims

1/ A method of manufacturing a sensor for detecting trace or impurity gases, the method comprising evaporating tin and/or tin oxides under a partial pressure of oxygen in order to condense vapor on an electrically insulating substrate to obtain a porous layer deposit thereon, wherein the evaporation of the metal or the metal oxides is performed under a flow of a mixture of gases containing both oxygen and an inert gas at a total pressure lying in the range 100 Pa to 200 Pa and with the partial pressure of the oxygen in the mixture lying in the range 20 Pa to 130 Pa.

2/ A method according to claim 1, wherein the partial pressure of the oxygen in the mixture is not more than 80 Pa.

3/ A method according to claim 1, wherein the partial pressure of the oxygen is about one-fifth of the total pressure.

4/ A method according to claim 1, wherein connection electrodes are made by depositing a layer of previously-evaporated gold on the support, either before or after building up the porous metal oxide layer.

5/ A sensor for detecting trace or impurity gas made by the method of any one of the preceding claims, wherein the metal oxide layer has a spongy structure which is free from oxides of the material from which the evaporation crucible is made.